# EUROPEAN PATENT APPLICATION

(11) **EP 1 515 156 A1**
(43) Date of publication of application: **16.03.2005**
(21) Application number: 02738632.5
(22) Date of filing: 06.06.2002
(51) Int. Cl.: G01S 5/14

(54) **GPS RECEIVER**

(71) Applicant: MATSUSHITA ELECTRIC INDUSTRIAL CO., LTD., Kadoma-shi, Osaka 571-0050 (JP)
(72) Inventor: MIYANO, Akifumi, Yokohama-shi, Kanagawa 222-0036 (JP); ISHIGAKI, Toshihiro, Yokohama-shi, Kanagawa 223-0057 (JP); SASAKI, Masahiro, Yokohama-shi, Kanagawa 240-0051 (JP)
(74) Representative: Grünecker, Kinkeldey, Stockmair & Schwanhäusser Anwaltssozietät
(86) International application number: PCT/JP2002/005617
(87) International publication number: WO 2003/104839

(57) **Abstract**

It is an object of the present invention to provide a GPS receiver capable of deciding quickly a GPS satellite as a communication object while suppressing a consumption power. In order to attain the object, when a receiving portion 101 does not receive WNa in the navigation message transmitted from the GPS satellite but receives WN, the GPS receiver of the present invention predicts WNa based on the received WN, and then restores the almanac based on this. Then, the almanac is stored in an almanac storing portion 103, and a satellite position calculating portion 106 reads the almanac as the case may be, and calculates a position of the satellite based on the almanac. The receiving portion 101 is controlled based on the calculated position of the satellite such that the navigation messages from a plurality of satellites that exist in the sky can be received, and a position measuring portion 107 measures the current position based on the navigation messages from a plurality of GPS satellites, which are received by the receiving portion 101.

## Description

### <Technical Field>

The present invention relates to a GPS receiver for measuring a current position by utilizing navigation messages from GPS satellites.

### <Background Art>

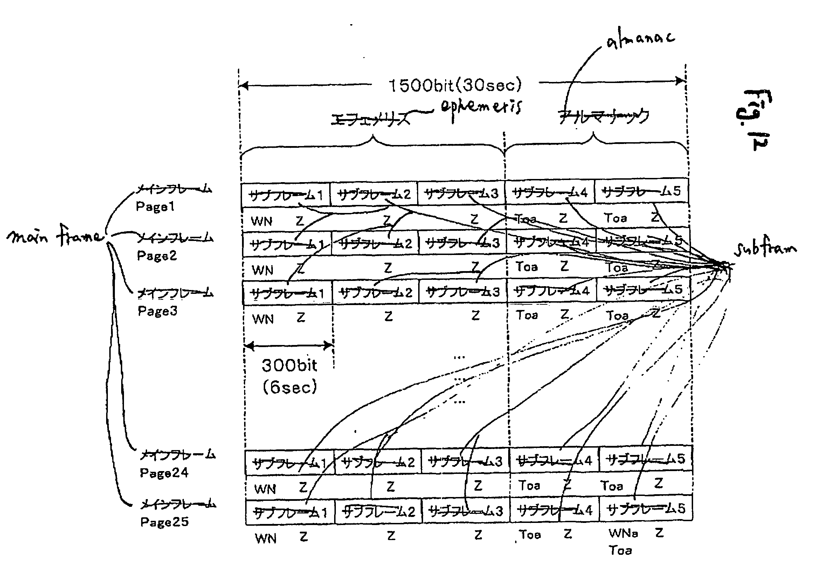

The GPS receiver for receiving the navigation message from the GPS satellite and then measuring an own existing position by utilizing such message is known in the prior art. FIG.12 is a view showing a frame structure of a navigation message that the conventional GPS receiver receives.

As shown in FIG.12, the navigation message that is transmitted from the GPS satellite consists of 25 main frames, and page numbers from Page 1 to Page 25 are affixed to respective main frames as consecutive numbers. One main frame consists of five subframes, and a quantity of data of one subframe is 300 bit.

In this case, since a transmission rate of the navigation message is 50 bps, it takes 6 seconds to transmit one subframe, it takes 30 seconds to transmit one main frame, and it takes 12.5 minutes to transmit the navigation message from Page 1 to Page 25.

The ephemeris as detailed orbit information of the satellite itself that is transmitting the navigation message is stored in the subframes 1 to 3. The completely same information are stored as the ephemeris irrespective of the page. Therefore, as the ephemeris of the satellite that is transmitting the navigation message, all ephemerides can be received by receiving only one main frame even though such main frame is in any page. Also, when the ephemeris of another satellite is to be received, the navigation message must be received from another satellite.

The almanac, which is schematic orbit information of the satellite, and other information are stored every page in the subframes 4 and 5 as information for different satellites respectively. In other words, the almanacs for all satellites are transmitted to the GPS receiver from one satellite, and the GPS receiver must receive all 25 main frames in order to acquire all these almanacs.

Also, time information data that is called Z count and indicates a time lapsed from a head of the week is stored in each subframe. Also, data that is called WN (Week Number) indicating the week number elapsed from a certain week as the reference is stored in the subframes 1 of respective main frames. Therefore, the GPS receiver can know a current time by using this WN and the Z count.

The almanacs for all satellites are stored in the subframes 4 and 5 of each page in such a way that data for one satellite can be stored in one subframe. WNa (Almanac Reference Week) indicating the time serving as the reference when the orbit of each satellite is calculated by using the almanac is stored only in the subframe 5 of Page 25 as common data of all satellites. Hence, in order to acquire perfectly the almanac, the subframe 5 of Page 25 that is transmitted only once in 12.5 minutes must be received.

Also, in order to mate the almanac stored in each subframe with WNa, data called Toa is stored in the subframe in which the almanac is stored and the subframe in which WNa is stored. The almanac is restored by using WNa only when Toas coincide with each other in both subframes.

In this case, both WNa and Toa are data indicating a time. WNa is a data indicating the week number lapsed from a certain week as the reference, and Toa is a data indicating the lapsed second from a head of the week. Where the date and hour that can be calculated based on WNa and Toa are used as the reference when the orbit of the satellite is calculated, and are called an epoch of the almanac.

In this manner, the navigation message that is transmitted from the GPS satellite is constructed by 25 main frames, and it takes 12.5 minutes to receive all main frames.

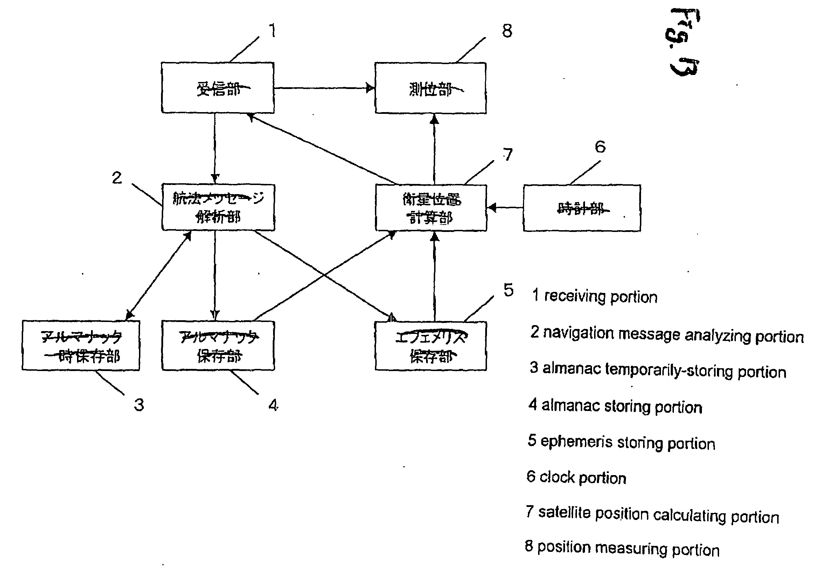

F1G.13 is a schematic block diagram showing an internal configuration of the conventional GPS receiver.

As shown in FIG.13, the conventional GPS receiver includes a receiving portion 1 for receiving the navigation message transmitted from at least one of a plurality of GPS satellites, a navigation message analyzing portion 2 for obtaining data such as the ephemeris, the almanac, etc. from the received navigation message and analyzing them, an almanac temporarily-storing portion 3 for temporarily storing the almanac that is obtained up by the navigation message analyzing portion 2, an almanac storing portion 4 for storing the restored almanac, an ephemeris storing portion 5 for storing the ephemeris, a clock portion 6 for counting a current time, a satellite position calculating portion 7 for calculating a position of the satellite, and a position-measuring calculating portion 8 for calculating a position-measuring of the GPS receiver based on the ephemeris stored in the navigation message that is transmitted from the GPS satellite as a communication object.

Next, operations of the conventional GPS receiver will be explained hereunder.

When the receiving portion 1 receives the navigation message from the GPS satellite, the navigation message analyzing portion 2 analyzes the received navigation message to pick up the ephemeris, the almanac, etc. and then stores them in the ephemeris storing portion 5 and the almanac storing portion 4 respectively. In this case, it is designed that the almanac cannot be restored until WNa that is transmitted only once in 12.5 minutes and is stored in the subframe 25 of Page 25 is received. For this reason, the navigation message analyzing portion 2 stores the almanac temporarily in the almanac temporarily-storing portion 3, then restores the almanac in the stage that WNa is received, and then stores the almanac in the almanac storing portion 4.

Also, the GPS receiver calculates the position of the satellite by the satellite position calculating portion 7 while using the current time, which is counted by the clock portion 6, and the almanac or the ephemeris. Then, the GPS receiver decides the satellites, which exist in the sky at that time (the satellites that can communicate with the GPS receiver, plural satellites as the communication object), and then assigns receiving channels to the receiving portion 1 to receive the signal from these satellites. The receiving portion 1 receives the navigation messages from the satellites that exist in the sky, and then the position measuring portion 8 measures the current position and the traveling speed of the GPS receiver based on the ephemeris contained in the navigation message.

However, in the conventional GPS receiver, the almanac is restored by using WNa that is transmitted only once in 12.5 minutes, and then stored. For this reason, it takes 12.5 minutes at the lowest until the almanacs of all satellites are acquired after the power supply is turned ON. Therefore, the power supply of the GPS receiver must be turned ON continuously for 12.5 minutes required until the almanacs of all satellites can be acquired. As a result, such a problem existed that power consumption is increased. Also, the power consumption became particularly a big problem in the mobile GPS receiver that uses a battery as the power supply, etc.

The present invention has been made to overcome the above problems, and it is an object of the present invention to provide a GPS receiver capable of deciding quickly a GPS satellite as a communication object while suppressing a consumption power.

### <Disclosure of Invention>

A GPS receiver of the present invention includes a receiving portion for receiving navigation messages transmitted from a plurality of GPS satellites respectively; a navigation message analyzing portion for obtaining an ephemeris and an almanac from the received navigation message to restore; an ephemeris storing portion for storing the obtained ephemeris; an almanac storing portion for storing the restored almanac; a clock portion for measuring a time to calculate a current time; a satellite position calculating portion for calculating positions of the plurality of GPS satellites by utilizing the current time calculated in the clock portion and the obtained ephemeris or the restored almanac; and a position measuring portion for calculating a position measuring based on the navigation message that is transmitted from the GPS satellite as a communication object; wherein the navigation message analyzing portion includes a predicting portion for predicting a time information stored only in a final subframe, which serves as a reference to calculate positions of the plurality of GPS satellites, based on information indicating a lapsed week number on a basis of a predetermined week stored in each main frame of the received navigation message respectively, and a restoring portion for restoring the almanac based on the predicted time information that serves as the reference to calculate the positions of the plurality of GPS satellites.

According to this configuration, unless the time information serving as the reference to calculate the references of a plurality of GPS satellites is not received, the almanac can be restored. As a result, the almanac can be restored in a short time, the GPS satellite as the communication object can be decided quickly while suppressing a consumption power.

A GPS receiver of the present invention includes a receiving portion for receiving navigation messages transmitted from a plurality of GPS satellites respectively; a navigation message analyzing portion for obtaining an ephemeris and an almanac from the received navigation message to restore; an ephemeris storing portion for storing the obtained ephemeris; an almanac storing portion; for storing the restored almanac; a clock portion for measuring a time to calculate a current time; a satellite position calculating portion for calculating positions of the plurality of GPS satellites by utilizing the current time calculated in the clock portion and the obtained ephemeris or the restored almanac; and a position measuring portion for calculating a position measuring based on the navigation message that is transmitted from the GPS satellite as a communication object; wherein the navigation message analyzing portion includes a predicting portion for predicting a time information stored only in a final subframe of the navigation message, which serves as a reference to calculate positions of the plurality of GPS satellites, based on the current time that is calculated in the clock portion, and a restoring portion for restoring the almanac based on the predicted time information that serves as the reference to calculate the positions of the plurality of GPS satellites.

According to this configuration, unless the time information serving as the reference to calculate the references of a plurality of GPS satellites is not received, the almanac can be restored. As a result, the almanac can be restored in a short time, the GPS satellite as the communication object can be decided quickly while suppressing a consumption power.

Also, a GPS receiver of the present invention further includes a portion for predicting a Z count stored in respective subframes of the navigation message based on the current time that is calculated in the clock portion; and a deciding portion for deciding that the restored almanac is abnormal when a difference between the predicted Z count and the Z count stored in the subframes of the navigation message exceeds a predetermined threshold value.

According to this configuration, if the restored almanac is abnormal, such almanac can be decided quickly and removed, and thus a malfunction can be prevented in advance.

Also, in the GPS receiver of the present invention, the satellite position calculating portion includes a first satellite position calculating portion for calculating positions of the plurality of GPS satellites by using the almanac that is stored in the almanac storing portion, and a second satellite position calculating portion for calculating positions of the plurality of GPS satellites by using the almanac that is restored on a basis of the predicted time information that serves as the reference to calculate the positions of the plurality of GPS satellites, and the GPS receiver of the present invention further includes a deciding portion for deciding that the restored almanac is abnormal when a difference between positions of the GPS satellites being calculated by the first satellite position calculating portion and the second satellite position calculating portion exceeds a predetermined threshold value.

According to this configuration, if the restored almanac is abnormal, such almanac can be decided quickly and removed, and thus a malfunction can be prevented in advance.

Also, in the GPS receiver of the present invention, the satellite position calculating portion includes a first satellite position calculating portion for calculating positions of the plurality of GPS satellites by using the ephemeris that is stored in the ephemeris storing portion, and a second satellite position calculating portion for calculating positions of the plurality of GPS satellites by using the almanac that is restored on a basis of the predicted time information that serves as the reference to calculate the positions of the plurality of GPS satellites, and the GPS receiver of the present invention further includes a deciding portion for deciding that the restored almanac is abnormal when a difference between positions of the GPS satellites being calculated by the first satellite position calculating portion and the second satellite position calculating portion exceeds a predetermined threshold value.

According to this configuration, if the restored almanac is abnormal, such almanac can be decided correctly, and thus a malfunction can be prevented in advance.

Also, a GPS receiver of the present invention further includes a Doppler-shift frequency calculating portion for calculating Doppler-shift frequencies of signals that are received, from the plurality of GPS satellites respectively; a Doppler-shift frequency predicting portion for predicting a Doppler-shift frequency by using the almanac that is restored by the restoring portion; and a deciding portion for deciding that the restored almanac is abnormal when a difference between the Doppler-shift frequency predicted by the Doppler-shift frequency predicting portion and the Doppler-shift frequencies calculated by the Doppler-shift frequency calculating portion exceeds a predetermined threshold value.

According to this configuration, if the restored almanac is abnormal, such almanac can be decided correctly, and thus a malfunction can be prevented in advance.

Also, a GPS receiver of the present invention further includes a first satellite position calculating portion for calculating the positions of the plurality of GPS satellites by using the almanac that has already been stored in the almanac storing portion; a second satellite position calculating portion for calculating positions of the plurality of GPS satellites respectively by using three almanacs that are restored based on the predicted time information that serves as the reference to calculate the positions of the plurality of GPS satellites (referred to as WNa hereinafter) and WNa-1 and WNa+1 that are obtained by adding/subtracting 1 to/from the WNa respectively; and a deciding portion for deciding the almanac used to calculate a position, which is closest to a position of the GPS satellite calculated by the first satellite position calculating portion, out of positions of three type GPS satellites, which are calculated by the second satellite position calculating portion, as a valid almanac.

According to this configuration, right almanacs can be collected by a short-time current supply, and thus a power storing can be implemented.

Also, a GPS receiver of the present invention further includes a first satellite position calculating portion for calculating the positions of the plurality of GPS satellites by using the ephemeris that has already been stored in the ephemeris storing portion;; a second satellite position calculating portion for calculating positions of the plurality of GPS satellites respectively by using three almanacs that are restored based on the predicted time information that serves as the reference to calculate the positions of the plurality of GPS satellites (referred to as WNa hereinafter) and WNa-1 and WNa+1 that are obtained by adding/subtracting 1 to/from the WNa respectively; and a deciding portion for deciding the almanac used to calculate a position, which is closest to a position of the GPS satellite calculated by the first satellite position calculating portion, out of positions of three type GPS satellites, which are calculated by the second satellite position calculating portion, as a valid almanac.

According to this configuration, right almanacs can be collected by a short-time current supply, and thus a power storing can be implemented.

Also, a GPS receiver of the present invention further includes a Doppler-shift frequency calculating portion for calculating Doppler-shift frequencies of signals that are received from the plurality of GPS satellites respectively; a Doppler-shift frequency predicting portion for predicting three type Doppler shift frequencies respectively by using three almanacs that are restored based on the predicted time information that serves as the reference to calculate the positions of the plurality of GPS satellites (referred to as WNa hereinafter) and WNa-1 and WNa+1 that are obtained by adding/subtracting 1 to/from the WNa respectively; and a deciding portion for deciding the almanac used to predict the Doppler-shift frequency, which is closest to the Doppler-shift frequency calculated by the Doppler-shift frequency calculating portion, out of three type Doppler- shift frequencies, which are predicted by the Doppler-shift frequency predicting portion, as a valid almanac.

According to this configuration, right almanacs can be collected by a short-time current supply, and thus a power storing can be implemented.

Also, a GPS receiver of the present invention further includes a time calculating portion for calculating a time based on the predicted time information that serves as the reference to calculate the positions of the plurality of GPS satellites and time information stored in respective main frames of the navigation message to indicate a second number lapsed from a head of a week; and a correcting portion for correcting the predicted time information that serves as the reference to calculate the positions of the plurality of GPS satellites such that a time calculated by the time calculating portion is below 3.5 days rather than the current time calculated by the clock portion.

According to this configuration, right almanacs can be collected by a short-time current supply, and thus a power storing can be implemented.

Also, in the GPS receiver of the present invention, the time information indicating the second number lapsed from a head of a week is stored in a subframe, in which the almanac is stored, of respective main frames of the navigation message, and prediction of the time information serving as the reference to calculate the positions of the plurality of GPS satellites is not repeated with respect to the almanac that contains the time information indicating the second number lapsed from the head of a same week, and the previously predicted WNa is used as it is.

According to this configuration, a quantity of processing to calculate WNa can be reduced, and a malfunction can be reduced.

Also, a GPS receiver of the present invention includes a receiving portion for receiving navigation messages transmitted from a plurality of GPS satellites respectively; a navigation message analyzing portion for obtaining an ephemeris and an almanac from the received navigation message to restore; an ephemeris storing portion for storing the obtained ephemeris; an almanac storing portion for storing the restored almanac; a clock portion for measuring a time to calculate a current time; a satellite position calculating portion for calculating positions of the plurality of GPS satellites by utilizing the current time calculated in the clock portion and the obtained ephemeris or the restored almanac; and a position measuring portion for calculating a position measuring based on the navigation message that is transmitted from the GPS satellite as a communication object; wherein the almanac is formulated based on the acquired ephemeris.

According to this configuration, since the almanac can be formulated at a point of time when the ephemeris is acquired, the almanacs can be collected simply by a short-time power supply.

### <Brief Description of Drawings>

FIG.1 is a schematic block diagram of a GPS receiver according to an embodiment of the present invention.
FIG.2 is a first flowchart explaining an operation of the GPS receiver according to the embodiment of the present invention.
FIG.3 is a second flowchart explaining the operation of the GPS receiver according to the embodiment of the present invention.
FIG.4 is a third flowchart explaining the operation of the GPS receiver according to the embodiment of the present invention.
FIG.5 is a fourth flowchart explaining the operation of the GPS receiver according to the embodiment of the present invention.
FIG.6 is a fifth flowchart explaining the operation of the GPS receiver according to the embodiment of the present invention.
FIG.7 is a sixth flowchart explaining the operation of the GPS receiver according to the embodiment of the present invention.
FIG.8 is a seventh flowchart explaining the operation of the GPS receiver according to the embodiment of the present invention.
FIG.9 is an eighth flowchart explaining the operation of the GPS receiver according to the embodiment of the present invention.
FIG.10 is a ninth flowchart explaining the operation of the GPS receiver according to the embodiment of the present invention.
FIG.11 is a tenth flowchart explaining the operation of the GPS receiver according to the embodiment of the present invention.
FIG.12 is a view showing a structure of a navigation message transmitted from the GPS satellite.
FIG.13 is a schematic block diagram showing a configuration of the conventional GPS receiver.

In this case, in these Figures, reference symbols 1, 101 are a receiving portion, 2, 102 are a navigation message analyzing portion, 3 is an almanac temporarily-storing portion, 4, 103 are an almanac storing portion, 5, 104 are an ephemeris storing portion, 6, 105 are a clock portion, 7, 106 are a satellite position calculating portion, and 8, 107 are a position measuring portion.

### <Best Mode for Carrying Out the lnvention>

Embodiments of the present invention will be explained with reference to the drawings hereinafter. In this case, the navigation message explained in following embodiments has the same frame structure as that shown in FIG.12.

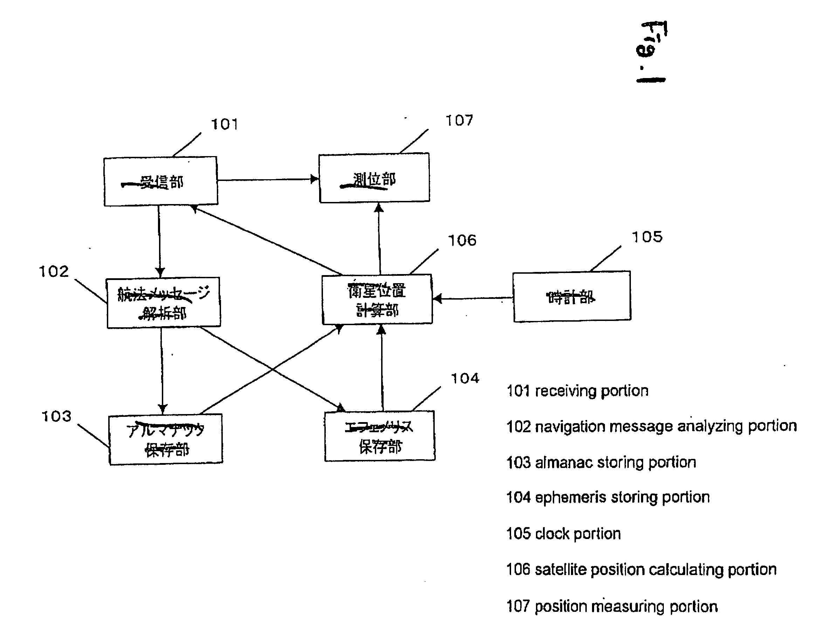

FIG.1 is a block diagram of a GPS receiver in an embodiment of the present invention.

As shown in FIG.1, the GPS receiver in the present embodiment includes a receiving portion 101 for receiving the navigation message transmitted from at least one of a plurality of GPS satellites, a navigation message analyzing portion 102 for obtaining data such as the ephemeris, the almanac, etc. from the received navigation message and analyzing them, an almanac storing portion 103 for storing the almanac restored by the navigation message analyzing portion 102, an ephemeris storing portion 104 for storing the ephemeris obtained by the navigation message analyzing portion 102, a clock portion 105 for counting a current time, a satellite position calculating portion 106 for calculating a position of the GPS satellite by utilizing the current time being counted in the clock portion 105 and the ephemeris or the restored almanac, and a position measuring portion 107 for calculating a position measuring based on the ephemeris stored in the navigation messages that are transmitted from a plurality of GPS satellites (satellites as a communication object) that are selected based on the position of the GPS satellite, which is calculated in the satellite position calculating portion 106. Also, the navigation message analyzing portion 102 includes a restoring portion (not shown, corresponding to a "restoring portion" in Claims) for restoring the almanac, and a WNa predicting portion (not shown, corresponding to a "predicting portion" in Claims) for predicting WNa stored in the subframe 5 in the main frame in Page 25, i.e., the final subframe of the navigation message, based on WN of the navigation message stored in each subframe 1.

The navigation message analyzing portion 102 restores the almanac by the restoring portion by using a value of WNa, like the conventional art, when WNa has already been received. In contrast, the navigation message analyzing portion 102 restores the almanac by using a value of WNa, which is predicted by the WNa predicting portion, when WNa has not been received (the power supply is turned ON for the first time, the value of WNa received at the time when the power supply is turned ON previously became old, or the like). In the present embodiment, the WNa predicting portion predicts the fact that the value of WN is the identical value to the value of WNa.

Next, an overall operation of the GPS receiver will be explained hereunder.

First, the receiving portion 101 receives the navigation message that is transmitted from the GPS satellite. The navigation message received by the receiving portion 101 is supplied to the navigation message analyzing portion 102, and then information such as the ephemeris, the almanac, etc. are obtained from the navigation message and are restored. The obtained ephemeris and the restored almanac are stored in the almanac storing portion 103 and the ephemeris storing portion 104 respectively. The stored ephemeris and almanac are read on an as-needed basis respectively, and are supplied to the satellite position calculating portion 106. The satellite position calculating portion 106 calculates positions of a plurality of GPS satellites by using the ephemeris or the almanac, based on a current time being counted by the clock portion 105. Then, the satellite position calculating portion 106 identifies the GPS satellite (communication object satellite) that is employed to measure a position, and controls the receiving portion 101 to receive the navigation message from the communication object satellite. The ephemeris contained in the navigation message, which is transmitted from the communication object satellite and is received by the receiving portion 101, is supplied to the position measuring portion 107. Here, a position measuring calculation is executed based on the ephemeris, and thus the current position is calculated.

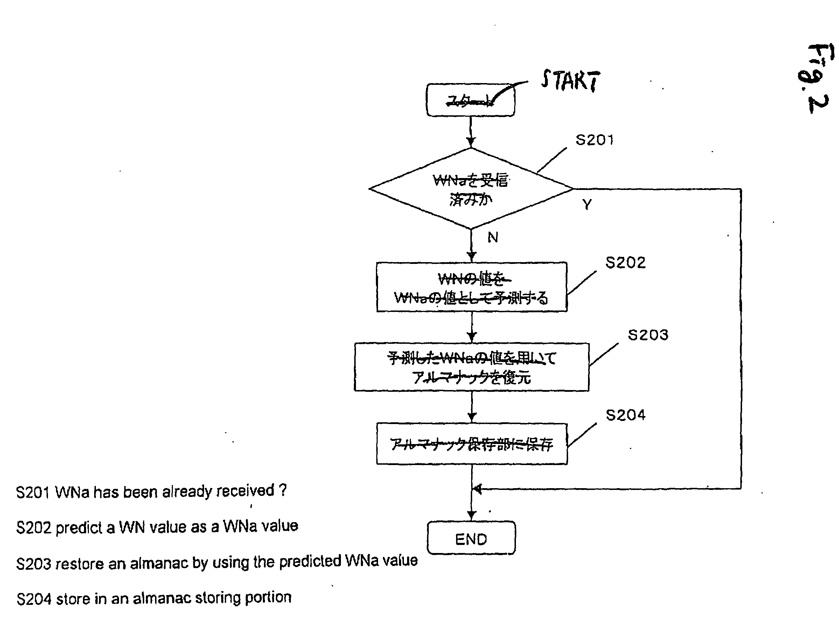

The above operations are a series of operations required until the current position is measured after the navigation message is received from the GPS satellite. In the present embodiment, as shown in FIG.2, the navigation message analyzing portion 102 decides whether or not WNa that is transmitted only once in 12.5 minutes has already been received (step 201). If WNa has not been received yet, a WN value that is stored in each main frame of the received navigation message is predicted, as it is, as a WNa value that is transmitted only once in 12.5 minutes as explained previously, i.e., that is stored only in the final subframe 5 (step 202). The almanac is restored based on the predicted WNa value (step 203). The almanac is stored in the almanac storing portion 103 (step 204). In contrast, if WNa has already been received (step 201: Y), the almanac is restored by the received WNa value, and then the restored almanac is stored in the almanac storing portion 103.

In the above explanation, it takes 30 second to restore the almanac that is stored in the subframe 4 and the subframe 5. Another example will be explained hereunder.

For instance, when reception of the navigation message is started from the subframe 4 of the main frame 1, the navigation message analyzing portion 102 sets the WN value as the WNa value at a point of time when the subframe 1 of the main frame 2 is received, and then restores the almanac, which is to be stored in the subframe 4 and the subframe 5 of the main frame 1, by using this WNa value. In this case, a time required until the almanac is restored is 18 second.

Also, when reception of the navigation message is started from the subframe 5 of the main frame 1, the navigation message analyzing portion 102 sets the WN value as the WNa value at a point of time when the subframe 1 of the main frame 2 is received, and then restores the almanac, which is to be stored in the subframe 5 of the main frame 1, by using this WNa value. In this case, a time required until the almanac is restored is 12 second.

Also, when reception of the navigation message is started from the middle of the subframe 4 of the main frame 1, the navigation message analyzing portion 102 sets the WN value as the WNa value at a point of time when the subframes 4, 5 of the main frame 1 and the subframes 1 to 4 of the main frame 2 are received, and then restores the almanac, which is to be stored in the subframe 5 of the main frame 1, by using this WNa value. In this case, a time required until the almanac is restored is longest and 36 second.

With the above, according to the present embodiment, the almanac that is stored in each subframe can be restored by using the WN value that is transmitted once in 30 second instead of the WNa value that is transmitted only once in 12.5 minutes. In this case, as explained in the above example, since the almanac can be restored by 36 second even in the longest case, a power supply time, to the receiving portion 101 can be shortened and thus a consumption power of the GPS receiver 100 required until the existing position is measured can be reduced.

In this event, a storing portion for storing temporarily the almanac that is not restored yet may be provided in restoring the almanac, and then the almanac that is stored temporarily may be restored based on WN when such WN is received. If doing this, the almanac in the succeeding page can be restored by using WN stored in the first subframe in the preceding page, and thus the almanac can be restored more effectively.

Also, in the present embodiment, the WNa predicting portion may be constructed not to predict the WN value contained in the navigation message as the WNa value but to predict the WNa value based on the current time that is counted by the clock portion 105.

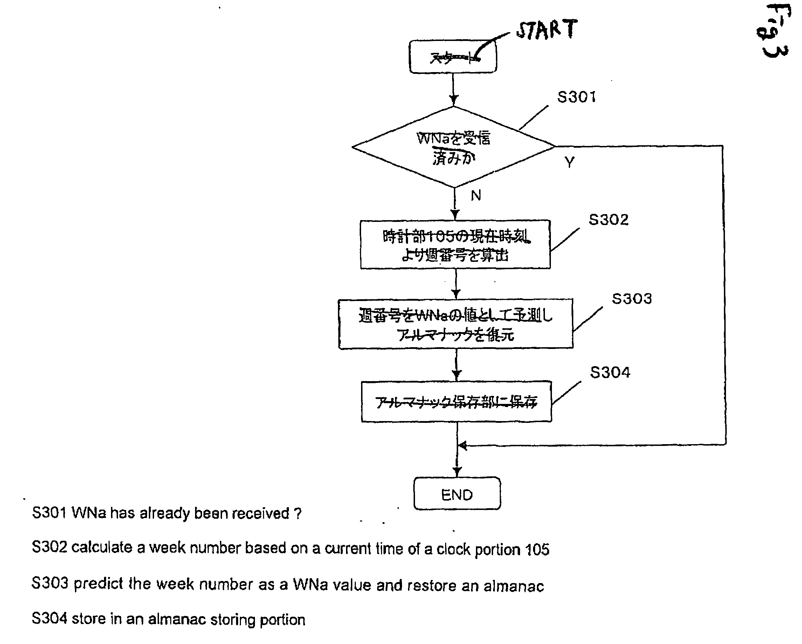

In this case, as shown in FIG. 3, the navigation message analyzing portion 102 decides whether or not WNa has already been received (step 301). If WNa has not been received, the navigation message analyzing portion 102 calculates a present week number based on the current time that is counted by the clock portion 105 (step 302), then restores the almanac by using the week number as the WNa value (step 303), and then stores the almanac in the almanac storing portion 103 (step 304).

If doing this, unless WN is received, WNa can be predicted, the almanac can be restored in a shorter time, and the almanac can be stored quickly in the almanac storing portions 103. Thus, the satellite position calculating portion 106 can use the almanac in the early stage.

Also, in the present embodiment, it is impossible to say that WNa that is predicted in this manner is always correct. Therefore, as explained in the following, a portion for deciding whether or not the predicted WNa is valid is provided.

That is, the navigation message analyzing portion 102 includes a Z-count predicting portion (not shown, corresponding to a "portion for predicting a Z count" in Claims) for predicting a time (Z count) lapsed from a head of the week based on the current time in the clock portion 105, and a deciding portion (not shown, corresponding to a "deciding portion" in Claims) for deciding whether or not the WNa value that is predicted by the WNa predicting portion is close to a correct value, based on the predicted time lapsed from the head of the week and the Z count stored in the received navigation message. Also, the navigation message analyzing portion 102 stores the restored almanac in the almanac storing portion 103 based on the decision result of the deciding portion.

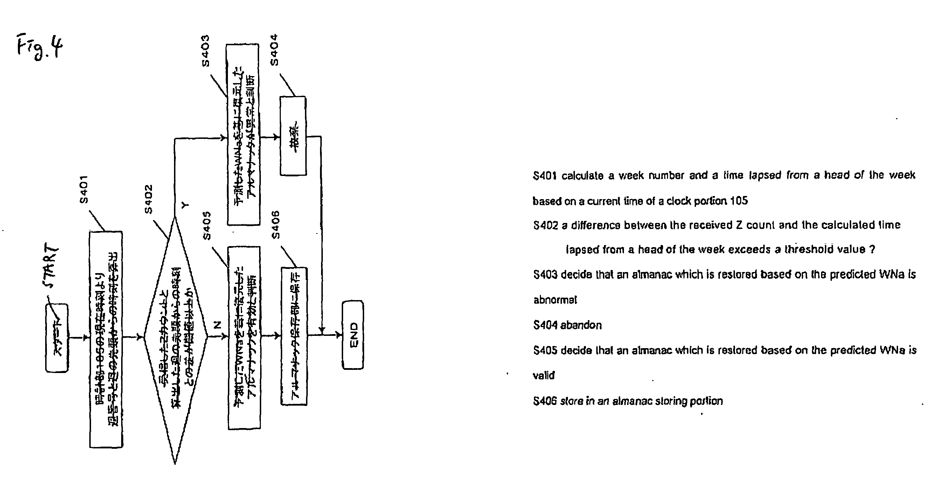

In this case, as shown in FIG.4, the navigation message analyzing portion 102 calculate the week number and the time lapsed from a head of the week, that the GPS satellite transmits, based on the current time in the clock portion 105 (step 401), and then decides by the deciding portion whether or not a difference between the calculated time lapsed from a head of the week and the received Z count exceeds a predetermined threshold value (step 402). Then, as the result of this decision, if such difference exceeds the threshold value, the navigation message analyzing portion 102 decides that the almanac restored based on the previously predicted WNa (step 303 in FIG.3) is abnormal (step 403), and then abandons the almanac (step 404). If such difference is below the threshold value, the navigation message analyzing portion 102 decides that the almanac restored based on the previously predicted WNa is valid (step 405), and then stores the almanac in the almanac storing portion 103 (step 406).

Therefore, according to the present embodiment, it can be decided quickly whether or not the almanac that is calculated based on the predicted WNa is valid, based on the time lapsed from the head of the week, which is predicted from the current time being counted in the clock portion 105, and the received Z count. Then, only the almanac that is decided as valid is stored exactly in the almanac storing portion 103. As a result, the position of the satellite being calculated by the satellite position calculating portion 106 becomes more effective, and the more exact positing measuring can be achieved.

Also, in the GPS receiver explained in the present embodiment, after the almanac that is close to the exact value (referred to as the valid almanac hereinafter) is stored in the almanac storing portion 103 in step 406 in FIG.4, the decision performed by the deciding portion when the navigation message is received may be executed once again on the basis of the position of the GPS satellite, which is calculated based on the valid almanac.

In this case, the GPS satellite position calculating portion 106 includes a first satellite position calculating portion for calculating the position of the GPS satellite based on the valid almanac, and a second satellite position calculating portion for calculating the position of the GPS satellite based on the almanac that is restored based on WNa predicted by the WNa predicting portion.

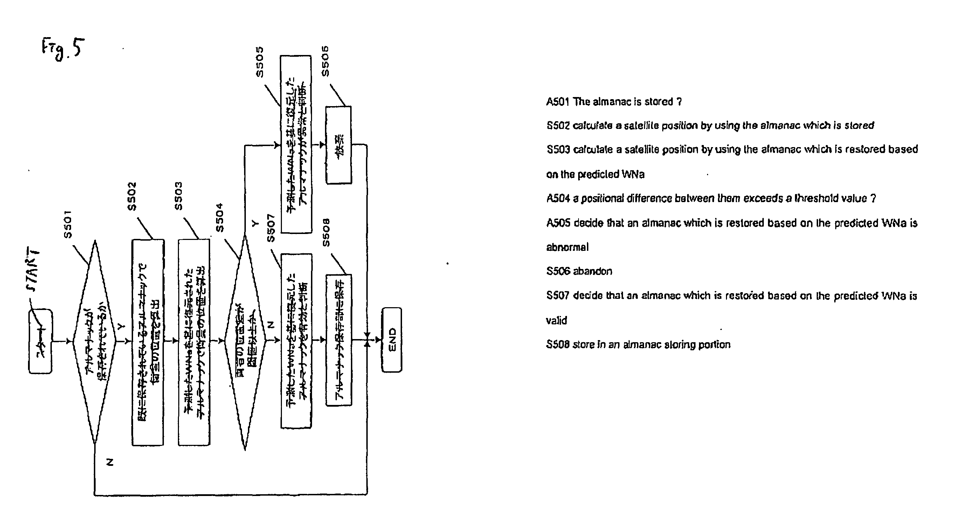

In other words, in the GPS receiver, as shown in FIG.5, the navigation message analyzing portion 102 decides whether or not the almanac has already been stored in the almanac storing portion 103 (step 501). If it is decided that the almanac has already been stored, the satellite position calculating portion 106 calculates the position of the GPS satellite based on the almanac that has already been stored (step 502). At the same time, the satellite position calculating portion 106 similarly calculates the position of the GPS satellite based on the almanac that is restored by using the predicted WNa (step 503). The deciding portion decides whether or not both positions are separated in excess of a predetermined threshold value (step 504). As the result of decision, if both positions are separated in excess of a predetermined threshold value, the navigation message analyzing portion 102 decides that the almanac that is restored based on the predicted WNa is abnormal (step 505), and then abandons such almanac (step 506). If both positions are not so separated, the navigation message analyzing portion 102 decides that the almanac that is restored based on the predicted WNa is valid (step 507), and then stores such almanac in the almanac storing portion 103 (step 508).

As described above, according to the present embodiment, it can be decided whether or not the almanac that is restored by using the predicted WNa value is valid, based on a distance between the position of the GPS satellite calculated by the valid almanac and the position of the GPS satellite calculated by the almanac that is restored by using the predicted WNa value.

Therefore, the position of the GPS satellite that is calculated based on the almanac being stored in the almanac storing portion 103 becomes valid. Thus, it can be prevented that the actual position of the GPS satellite is largely different from the predicted position of the GPS satellite.

In the present embodiment, if the ephemeris that is stored in the ephemeris storing portion 104 is employed in place of the almanac that is stored in the almanac storing portion 103, the similar advantages can be achieved.

In this case, in step 501, it may be decided whether or not the ephemeris has already been stored in the ephemeris storing portion 104. Then, if the ephemeris has already been stored, the process may go to step 502. Then, in step 502, the position of the GPS satellite may be calculated based on the stored ephemeris. In step 504, it may be decided whether or not a difference in positions calculated in step 502 and step 503 respectively exceeds a predetermined threshold value. Then, the process may go to step 505 or step 507 based on the decision result.

Also, in the present embodiment, based on a Doppler-shift frequency of the navigation message that is transmitted from a certain GPS satellite, the deciding portion may decide whether or not the predicted WNa is valid. In this case, the GPS receiver includes a Doppler-shift frequency calculating portion (not shown) for calculating the Doppler-shift frequency of the navigation message that is transmitted from a certain GPS satellite, and a Doppler- shift frequency predicting portion (not shown) for predicting the Doppler-shift frequency of the navigation message transmitted from the above certain GPS satellite by using the almanac that is restored based on the predicted WNa.

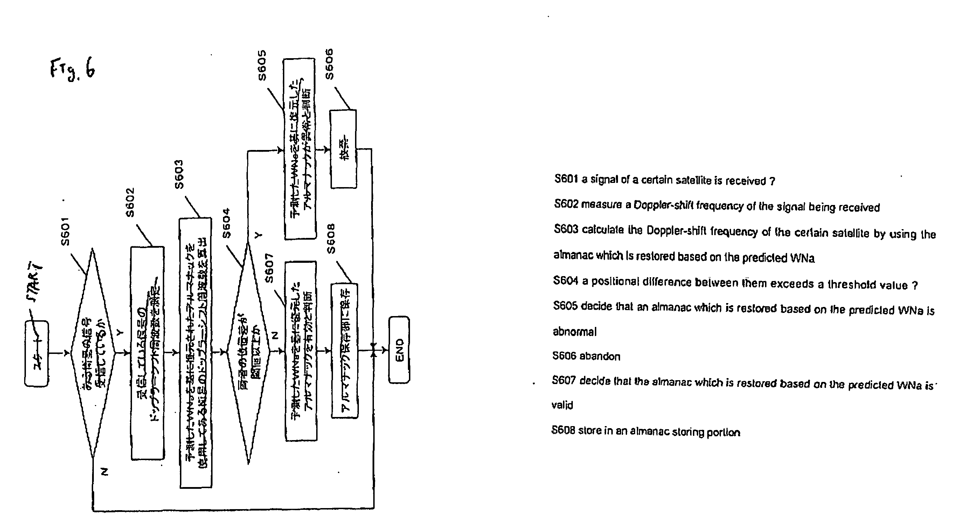

That is, in the GPS receiver in this case, as shown in FIG.6, at a point of time when the almanac of a certain satellite is received, it is decided whether or not a signal is being received from the certain satellite (step 601). If it is decided that the signal is being received from the certain satellite, the Doppler-shift frequency of the received signal is calculated (step 602). At the same time, the Doppler-shift frequency of the signal from the above satellite is calculated by using the almanac that is restored based on the predicted WNa (step 603). It is decided whether or not a positional difference between them exceeds a predetermined threshold value (step 604). As the result of decision, if the difference exceeds the predetermined threshold value, the navigation message analyzing portion 102 decides that the almanac that is restored based on the predicted WNa is abnormal (step 605), and then abandons the almanac (step 606). If the difference is below the predetermined threshold value, the navigation message analyzing portion 102 decides that the almanac that is restored based on the predicted WNa is valid, and then stores the almanac in the almanac storing portion 103.

Therefore, according to the present embodiment, at the Doppler-shift frequency of the signal that is being received actually, it is decided whether or not the almanac that is calculated based on the predicted WNa is normal, and thus the malfunction can be reduced much more.

In the present embodiment, when the navigation message analyzing portion 102 restores the almanac, such almanac is restored based on the predicted WNa and then such almanac is stored in the almanac storing portion 103 as it is. However, as explained in the following, WNa+1 and WNa-1 may be calculated in addition to WNa by adding/subtracting 1 to/from the predicted WNa, then three almanacs of one GPS satellite may be restored by using them respectively, and then the valid one may be selected from them and stored in the almanac storing portion 103.

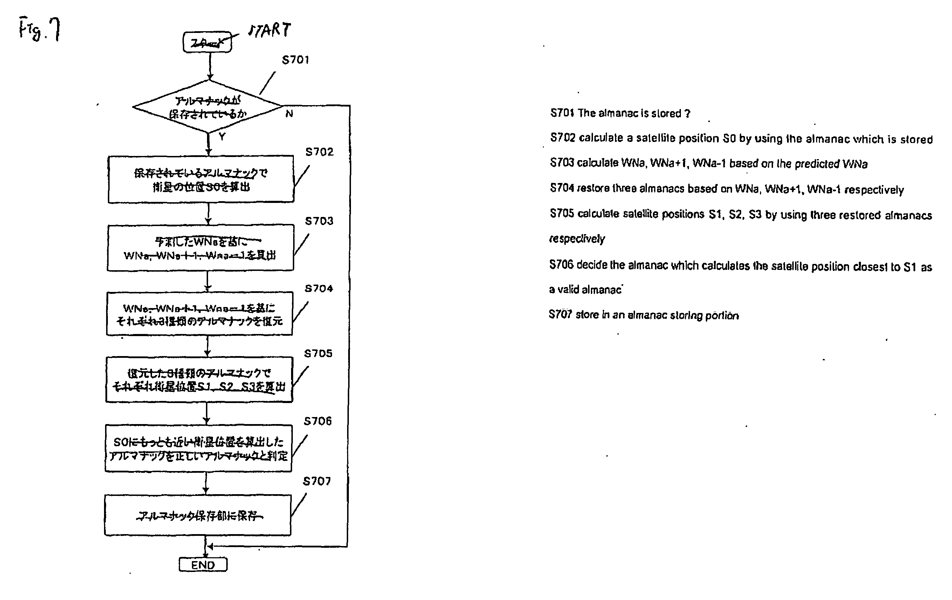

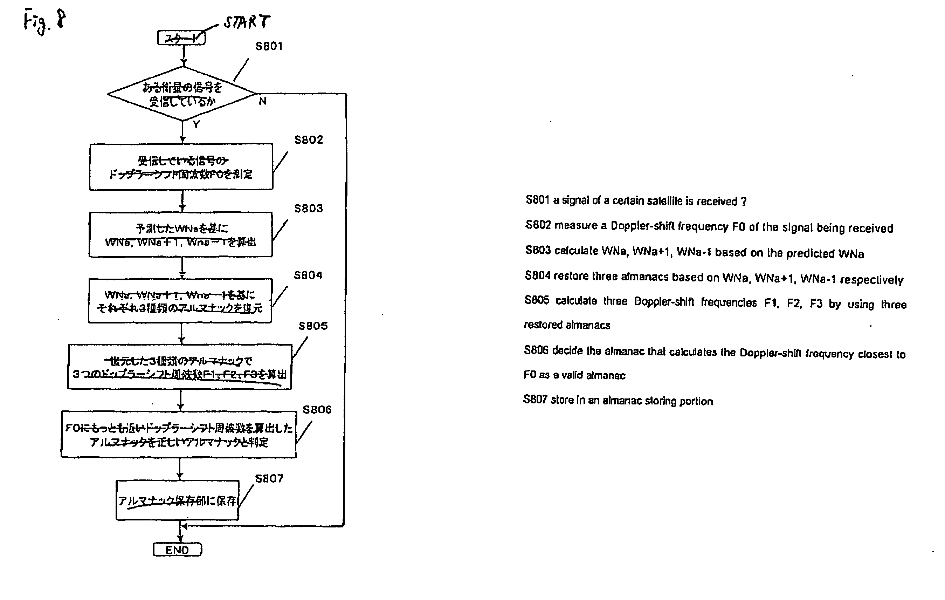

That is, FIG.7 and FIG.8 show an embodiment that is constructed in this fashion respectively, and these embodiments will be explained in detail hereunder.

In the embodiment shown in FIG.7, the GPS receiver decides whether or not the almanac has already been stored in the almanac storing portion 103 (step 701). If the almanac has already been stored, the first satellite position calculating portion calculates a position S0 of the GPS satellite by using the almanac that has already been stored (step 702). Then, as described above, WNa, WNa+1, WNa-1. are calculated based on the predicted WNa (step 703). Three almanacs are restored based on these WNa, WNa+1, WNa-1 respectively (step 704). The second satellite position calculating portion calculates positions S1, S2, S3 of the GPS satellite by using three restored almanacs respectively (step 705). The almanac that calculates the position of the GPS satellite, which is closest to the previously calculated position SO of the GPS satellite, is decided as the correct almanac (step 706). The almanac is stored in the almanac storing portion 103 (step 707).

Also, in the embodiment shown in FIG.8, at a point of time when the almanac of a certain GPS satellite is received, the GPS receiver decides whether or not a signal is being received from the certain satellite (step 801). If the signal is being received, a Doppler-shift frequency F0 of the signal that is being received is calculated by the Doppler-shift frequency calculating portion (step 802). Then, the navigation message analyzing portion 102 calculates WNa, WNa+1, WNa-1 based on the predicted WNa (step 803). Three almanacs are restored based on WNa, WNa+1, WNa-1 respectively (step 804). The Doppler-shift frequency predicting portion predicts Doppler-shift frequencies F1, F2, F3 of the signals from three satellites by using three restored almanacs respectively (step 805). The almanac used to predict the Doppler-shift frequency that is closest to the previously calculated Doppler-shift frequency F0 is decided as a valid almanac (step 806). The almanac is stored in the almanac storing portion 103 (step 807).

In this manner, according to the embodiments shown in FIG.7 and FIG.8, WNa+1 and WNa-1 are calculated by adding/ subtracting 1 to/from the previously predicted WNa respectively, then the almanacs are restored by using them respectively, and then the almanac that is supposed as the most valid one may be selected. Therefore, even if the predicted WNa has an error of ±1, such error can be easily corrected and thus the more exact almanac can be obtained.

In the embodiment shown in FIG.7, it is decided whether or not the almanac has already been stored in the almanac storing portion 103 (step 701), and then the position S0 of the GPS satellite is calculated by using the stored almanac (step 702) if the almanac has already been stored. In this case, it is needless to say that, if the ephemeris has already been stored in the ephemeris storing portion 104, the position S0 of the GPS satellite may be calculated by using the stored ephemeris, then the almanac used to calculate the position of the GPS satellite that is closest to the previously calculated position S0 of the GPS satellite out of the positions S1, S2, S3 of the GPS satellites, which are calculated by using three almanacs being restored based on the predicted WNa, may be decided as the correct almanac, and then the almanac may be stored in the almanac storing portion 103.

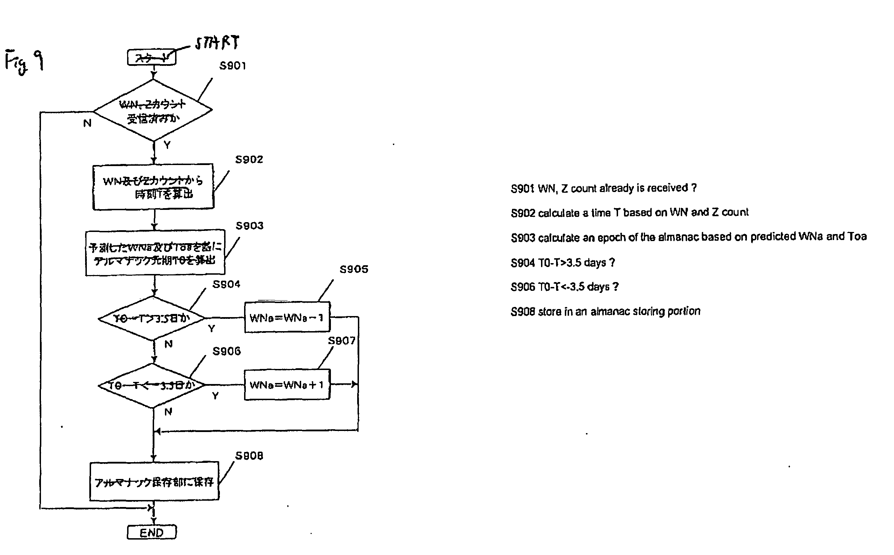

Also, in the embodiments shown in FIG.7 and FIG.8, etc., three almanacs are calculated and then the valid one is selected from them. In this case, as shown in FIG.9, the predicted WNa may be corrected automatically under certain conditions, then the almanac may be calculated based on the corrected WNa, and then such almanac may be stored in the almanac storing portion 103. Also, such configuration may be added.

In this case, the GPS receiver includes a time calculating portion (not shown, corresponding to a "time calculating portion) for calculating a time based on the received WN and Z count, and a correcting portion (not shown, corresponding to a "correcting portion) for correcting the predicted WNa value.

That is, in the embodiment shown in FIG.9, first the GPS receiver decides whether or not WN and the Z count have already been received (step 901). If WN and the Z count have already been received, a time T is calculated based on WN and Z count (step 902). In contrast, an epoch T0 of the almanac is calculated based on predicted WNa and Toa (step 903). It is decided whether or not T0-T exceeds 3.5 days (step 904). If T0-T exceeds 3.5 days, WNa is corrected to WNa-1 (step 905). If T0-T is within 3.5 days, it is decided whether or not T0-T is below -3.5 days (step 906). If T0-T is below -3.5 days, WNa is corrected to WNa+1 (step 907). Then, the almanac is restored based on the correct WNa, which is corrected or not corrected, and is stored in the almanac storing portion 103, (step 908). Here, 3,5 days are an update period of the almanac, and such a condition that an absolute value of the T0-T value is 3.5 days or less is an allowable error range defined by NASA (National Aeronautics and Space Administration).

Therefore, according to the embodiment shown in FIG.9, the predicted WNa is corrected automatically into the proper WNa, and thus the proper almanac can be obtained easily not to restore three almanacs.

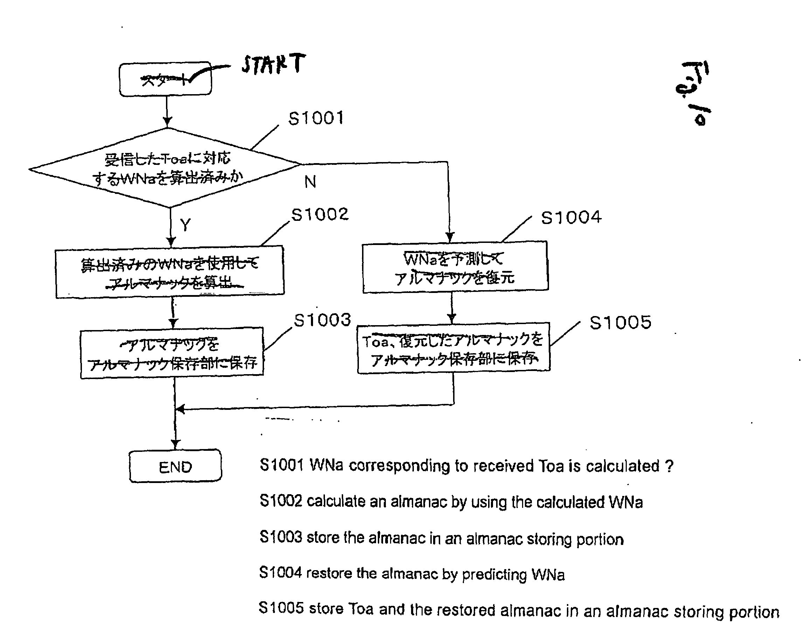

Also, as shown in FIG.10, the navigation message analyzing portion 102 decides whether or not WNa that corresponds to received Toa has already been received (step 1001). If WNa has already been received, the almanac is restored by using the received WNa (step 1002). Then, the almanac is stored in the almanac storing portion 103 (step 1003). Therefore, it is needless to say that, only if WNa that corresponds to the received Toa has not already been received, as shown in FIG.2 and FIG.3, WNa is predicted based on WN or the current time in the clock portion 105, then the almanac is restored by using the predicted WNa (step 1004), and then the almanac and Toa are stored in the almanac storing portion 103 (step 1005).

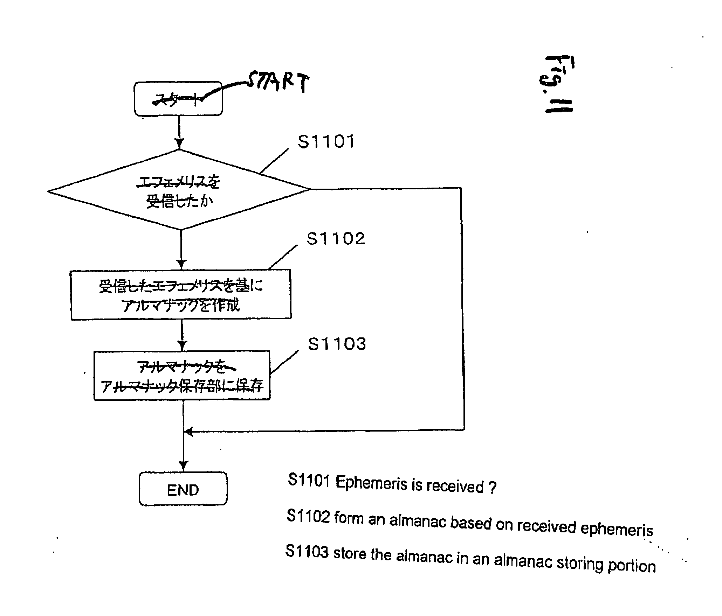

Also, in the above embodiments, WNa is predicted on the basis of WN and the current time in the clock portion 105. In this case, as shown in FIG.11, the navigation message analyzing portion 102 may decide whether or not the ephemeris has been received completely (step 1101). If the ephemeris has been received, the almanac may be formulated based on the received ephemeris (step 1102). Then, the almanac may be stored in the almanac storing portion 103 (step 1103). Therefore, the GPS receiver may be constructed to have an almanac formulating portion for formulating the almanac based on the ephemeris.

Also, in the above explanation, the GPS receiver is explained to have appropriately and selectively respective configurations. But the GPS receiver may have all configurations, otherwise the GPS receiver may have plural configurations in combination arbitrarily and selectively.

Although the present invention is explained in detail with reference to particular embodiments, it is apparent for the person skilled in the art that various variations and modifications can be applied without departing from the spirit and the scope of the present invention.

### <Industrial Applicability>

According to the present invention, the GPS receiver that is capable of deciding quickly the GPS satellite as the communication object while suppressing a consumption power can be provided.

## Claims

1. A GPS receiver, comprising:
a receiving portion, receiving navigation messages transmitted from a plurality of GPS satellites respectively;
a navigation message analyzing portion, obtaining an ephemeris and an almanac from the received navigation message to restore;
an ephemeris storing portion, storing the obtained ephemeris;
an almanac storing portion, storing the restored almanac;
a clock portion, measuring a time to calculate a current time;
a satellite position calculating portion, calculating positions of the plurality of GPS satellites by using the current time calculated in the clock portion and the obtained ephemeris or the restored almanac; and
a position measuring portion, calculating a position measuring based on the navigation message transmitted from the GPS satellite as a communication object,
wherein the navigation message analyzing portion includes a predicting portion which predicts a time information stored only in a final subframe, which serves as a reference to calculate positions of the plurality of GPS satellites, based on information indicating a lapsed week number on a basis of a predetermined week stored in each main frame of the received navigation message respectively, and a restoring portion which restores the almanac based on the predicted time information which serves as the reference to calculate the positions of the plurality of GPS satellites.

2. A GPS receiver, comprising:
a receiving portion, receiving navigation messages transmitted from a plurality of GPS satellites respectively;
a navigation message analyzing portion, obtaining an ephemeris and an almanac from the received navigation message to restore;
an ephemeris storing portion, storing the obtained ephemeris;
an almanac storing portion, storing the restored almanac;
a clock portion, measuring a time to calculate a current time;
a satellite position calculating portion, calculating positions of the plurality of GPS satellites by using the current time calculated in the clock portion and the obtained ephemeris or the restored almanac; and
a position measuring portion, calculating a position measuring based on the navigation message transmitted from the GPS satellite as a communication object,
wherein the navigation message analyzing portion includes a predicting portion which predicts a time information stored only in a final subframe of the navigation message, which serves as a reference to calculate positions of the plurality of GPS satellites, based on the current time which is calculated in the clock portion, and a restoring portion which restores the almanac based on the predicted time information which serves as the reference to calculate the positions of the plurality of GPS satellites.

3. The GPS receiver according to claim 1 or 2, further comprising:
a portion, predicting a Z count stored in respective subframes of the navigation message based on the current time which is calculated in the clock portion; and
a deciding portion, deciding that the restored almanac is abnormal when a difference between the predicted Z count and the Z count stored in the subframes of the navigation message exceeds a predetermined threshold value.

4. The GPS receiver according to claim 3, wherein the satellite position calculating portion includes a first satellite position calculating portion which calculates positions of the plurality of GPS satellites by using the almanac stored in the almanac storing portion, and a second satellite position calculating portion which calculates positions of the plurality of GPS satellites by using the almanac which is restored on a basis of the predicted time information which serves as the reference to calculate the positions of the plurality of GPS satellites, and
the GPS receiver, further comprising:
a deciding portion, deciding that the restored almanac is abnormal when a difference between positions of the GPS satellites calculated by the first satellite position calculating portion and the second satellite position calculating portion exceeds a predetermined threshold value.

5. The GPS receiver according to claim 1 or 2, wherein the satellite position calculating portion includes a first satellite position calculating portion which calculates positions of the plurality of GPS satellites by using the ephemeris which is stored in the ephemeris storing portion, and a second satellite position calculating portion which calculates positions of the plurality of GPS satellites by using the almanac which is restored on a basis of the predicted time information that serves as the reference to calculate the positions of the plurality of GPS satellites, and
the GPS receiver, further comprising:
a deciding portion, deciding that the restored almanac is abnormal when a difference between positions of the GPS satellites calculated by the first satellite position calculating portion and the second satellite position calculating portion exceeds a predetermined threshold value.

6. The GPS receiver according to claim 1 or 2, further comprising:
a Doppler-shift frequency calculating portion, calculating Doppler-shift frequencies of signals received from the plurality of GPS satellites respectively;
a Doppler-shift frequency predicting portion, predicting a Doppler-shift frequency by using the almanac which is restored by the restoring portion; and
a deciding portion, deciding that the restored almanac is abnormal when a difference between the Doppler-shift frequency predicted by the Doppler-shift frequency predicting portion and the Doppler-shift frequencies calculated by the Doppler-shift frequency calculating portion exceeds a predetermined threshold value.

7. The GPS receiver according to claim 3, further comprising:
a first satellite position calculating portion, calculating the positions of the plurality of GPS satellites by using the almanac which is stored in the almanac storing portion;
a second satellite position calculating portion, calculating positions of the plurality of GPS satellites respectively by using three almanacs which are restored based on the predicted time information (referred to as WNa hereinafter) which serves as the reference to calculate the positions of the plurality of GPS satellites and WNa-1 and WNa+1 which are obtained by adding/subtracting 1 to/from the WNa respectively; and
a deciding portion, deciding the almanac used to calculate a position, which is closest to a position of the GPS satellite calculated by the first satellite position calculating portion, among three positions of the GPS satellite, which are calculated by the second satellite position calculating portion, as a valid almanac.

8. The GPS receiver according to claim 1 or 2, further comprising:
a first satellite position calculating portion, calculating the positions of the plurality of GPS satellites by using the ephemeris which is stored in the ephemeris storing portion;
a second satellite position calculating portion, calculating positions of the plurality of GPS satellites respectively by using three almanacs which are restored based on the predicted time information (referred to as WNa hereinafter) which serves as the reference to calculate the positions of the plurality of GPS satellites, and WNa-1 and WNa+1 which are obtained by adding/subtracting 1 to/from the WNa respectively; and
a deciding portion, deciding the almanac used to calculate a position, which is closest to a position of the GPS satellite calculated by the first satellite position calculating portion, among three positions of the GPS satellite, which are calculated by the second satellite position calculating portion, as a valid almanac.

9. The GPS receiver according to claim 1 or 2, further comprising:
a Doppler-shift frequency calculating portion, calculating Doppler-shift frequencies of signals received from the plurality of GPS satellites respectively;
a Doppler-shift frequency predicting portion, predicting three Doppler-shift frequencies respectively by using three almanacs which are restored based on the predicted time information (referred to as WNa hereinafter) which serves as the reference to calculate the positions of the plurality of GPS satellites, and WNa-1 and WNa+1 which are obtained by adding/subtracting 1 to/from the WNa respectively; and
a deciding portion, deciding the almanac used to predict the Doppler-shift frequency, which is closest to the Doppler-shift frequency calculated by the Doppler-shift frequency calculating portion, among the three Doppler-shift frequencies, which are predicted by the Doppler-shift frequency predicting portion, as a valid almanac.

10. The GPS receiver according to claim 1 or 2, further comprising:
a time calculating portion, calculating a time based on the predicted time information which serves as the reference to calculate the positions of the plurality of GPS satellites and time information stored in respective main frames of the navigation message to indicate a second number lapsed from a head of a week; and
a correcting portion, correcting the predicted time information which serves as the reference to calculate the positions of the plurality of GPS satellites such that the time calculated by the time calculating portion is below 3.5 days rather than the current time calculated by the clock portion.

11. The GPS receiver according to claim 1 or 2, wherein the time information indicating the second number lapsed from a head of a week is stored in a subframe, in which the almanac is stored, of respective main frames of the navigation message; and
wherein the previously predicted WNa is used as the time information with respect to the almanac which contains the time information indicating the second number lapsed from the head of a same week, instead of repeating a prediction of the time information serving as the reference to calculate the positions of the plurality of GPS satellites.

12. A GPS receiver, comprising:
a receiving portion, receiving navigation messages transmitted from a plurality of GPS satellites respectively;
a navigation message analyzing portion, obtaining an ephemeris and an almanac from the received navigation message to restore;
an ephemeris storing portion stoning the obtained ephemeris;
an almanac storing portion, storing the restored almanac;
a clock portion, measuring a time to calculate a current time;
a satellite position calculating portion, calculating positions of the plurality of GPS satellites by using the current time calculated in the clock portion and the obtained ephemeris or the restored almanac; and
a position measuring portion, calculating a position measuring based on the navigation message transmitted from the GPS satellite as a communication object,
wherein the almanac is formed on the basis of the obtained ephemeris.
